# EUROPEAN PATENT SPECIFICATION

(11) **EP 4 456 577 B1**
(45) Date of publication and mention of the grant of the patent: **09.09.2026**
(21) Application number: 24189362.7
(22) Date of filing: 04.08.2021
(51) Int. Cl.: H04W 8/00, H04W 92/18, H04W 76/14, H04W 88/04, H04W 72/02

(54) **NR SIDELINK RELAYING DISCOVERY**
ENTDECKUNG VON NR-SIDELINK-WEITERLEITUNG
DÉCOUVERTE DE RELAIS DE LIAISON LATÉRALE NR

(30) Priority: 05.08.2020 EP 20189691; 21.10.2020 EP 20202969
(43) Date of publication of application: 30.10.2024
(62) Document number(s) of the earlier application(s) in accordance with Art. 76 EPC: 21755460.9 / 4 193 617
(73) Proprietor: Fraunhofer-Gesellschaft zur Förderung der angewandten Forschung e.V., 80686 München (DE)
(72) Inventor: Harounabadi, Mehdi, 91058 Erlangen (DE); Leyh, Martin, 91058 Erlangen (DE); Roth-Mandutz, Elke, 91058 Erlangen (DE); Bhadauria, Shubhangi, 91058 Erlangen (DE); Mohammad Soleymani, Dariush, 91058 Erlangen (DE); Lipka, Dietmar, 91058 Erlangen (DE)
(74) Representative: Schlenker, Julian

(56) References cited:
- EP-A1- 3 229 549
- EP-A2- 2 833 694
- WO-A1-2016/164582
- WO-A1-2016/164808

## Description

Embodiments of the present application relate to the field of wireless communication, and more specifically, to new radio, NR, sidelink relaying discovery.

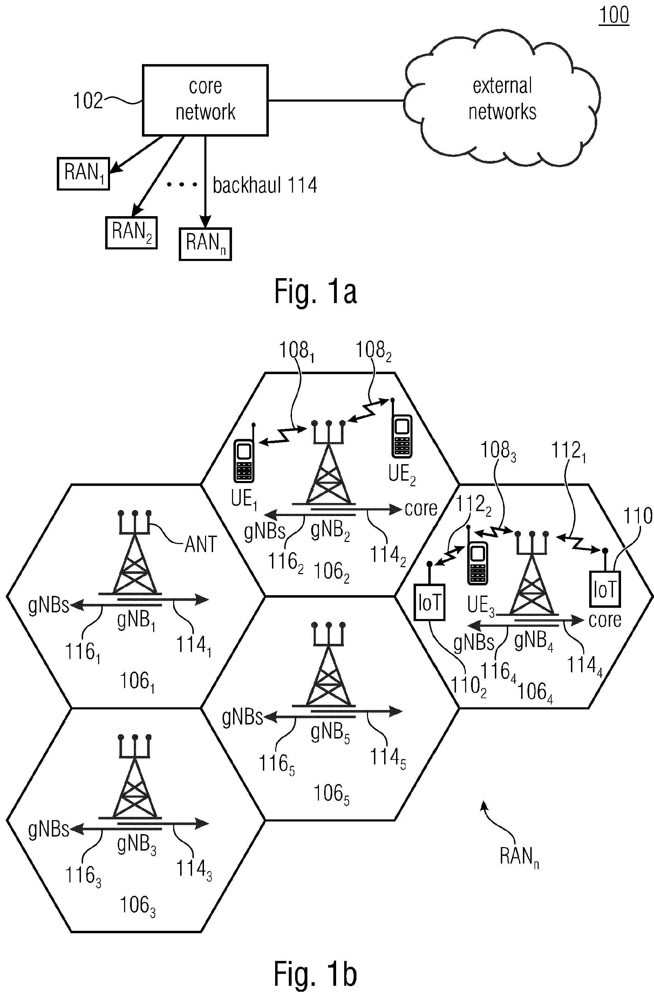

Fig. 1 is a schematic representation of an example of a terrestrial wireless network 100 including, as is shown in Fig. 1(a), a core network 102 and one or more radio access networks RAN1, RAN2, ... RANn. Fig. 1(b) is a schematic representation of an example of a radio access network RANn that may include one or more base stations gNB1 to gNB5, each serving a specific area surrounding the base station schematically represented by respective cells 1061 to 1065. The base stations are provided to serve users within a cell. The term base station, BS, refers to a gNB in 5G networks, an eNB in UMTS/LTE/LTE-A/ LTE-A Pro, or just a BS in other mobile communication standards. A user may be a stationary device or a mobile device. The wireless communication system may also be accessed by mobile or stationary loT devices which connect to a base station or to a user. The mobile devices or the loT devices may include physical devices, ground based vehicles, such as robots or cars, aerial vehicles, such as manned or unmanned aerial vehicles (UAVs), the latter also referred to as drones, buildings and other items or devices having embedded therein electronics, software, sensors, actuators, or the like as well as network connectivity that enables these devices to collect and exchange data across an existing network infrastructure. Fig. 1(b) shows an exemplary view of five cells, however, the RANn may include more or less such cells, and RANn may also include only one base station. Fig. 1(b) shows two users UE1 and UE2, also referred to as user equipment, UE, that are in cell 1062 and that are served by base station gNB2. Another user UE3 is shown in cell 1064 which is served by base station gNB4. The arrows 1081, 1082 and 1083 schematically represent uplink/downlink connections for transmitting data from a user UE1, UE2 and UE3 to the base stations gNB2, gNB4 or for transmitting data from the base stations gNB2, gNB4 to the users UE1, UE2, UE3. Further, Fig. 1(b) shows two loT devices 1101 and 1102 in cell 1064, which may be stationary or mobile devices. The loT device 1101 accesses the wireless communication system via the base station gNB4 to receive and transmit data as schematically represented by arrow 1121. The loT device 1102 accesses the wireless communication system via the user UE3 as is schematically represented by arrow 1122. The respective base station gNB1 to gNB5 may be connected to the core network 102, e.g. via the S1 interface, via respective backhaul links 1141 to 1145, which are schematically represented in Fig. 1(b) by the arrows pointing to "core". The core network 102 may be connected to one or more external networks. Further, some or all of the respective base station gNB1 to gNB5 may connected, e.g. via the S1 or X2 interface or the XN interface in NR, with each other via respective backhaul links 1161 to 1165, which are schematically represented in Fig. 1(b) by the arrows pointing to "gNBs".

For data transmission a physical resource grid may be used. The physical resource grid may comprise a set of resource elements to which various physical channels and physical signals are mapped. For example, the physical channels may include the physical downlink, uplink and sidelink shared channels (PDSCH, PUSCH, PSSCH) carrying user specific data, also referred to as downlink, uplink and sidelink payload data, the physical broadcast channel (PBCH) carrying for example a master information block (MIB), the physical downlink shared channel (PDSCH) carrying for example a system information block (SIB), the physical downlink, uplink and sidelink control channels (PDCCH, PUCCH, PSSCH) carrying for example the downlink control information (DCI), the uplink control information (UCI) and the sidelink control information (SCI). For the uplink, the physical channels, or more precisely the transport channels according to 3GPP, may further include the physical random access channel (PRACH or RACH) used by UEs for accessing the network once a UE is synchronized and has obtained the MIB and SIB. The physical signals may comprise reference signals or symbols (RS), synchronization signals and the like. The resource grid may comprise a frame or radio frame having a certain duration in the time domain and having a given bandwidth in the frequency domain. The frame may have a certain number of subframes of a predefined length, e.g. 1ms. Each subframe may include one or more slots of 12 or 14 OFDM symbols depending on the cyclic prefix (CP) length. All OFDM symbols may be used for DL or UL or only a subset, e.g. when utilizing shortened transmission time intervals (sTTI) or a minislot/non-slot-based frame structure comprising just a few OFDM symbols.

The wireless communication system may be any single-tone or multicarrier system using frequency-division multiplexing, like the orthogonal frequency-division multiplexing (OFDM) system, the orthogonal frequency-division multiple access (OFDMA) system, or any other IFFT-based signal with or without CP, e.g. DFT-s-OFDM. Other waveforms, like nonorthogonal waveforms for multiple access, e.g. filter-bank multicarrier (FBMC), generalized frequency division multiplexing (GFDM) or universal filtered multi carrier (UFMC), may be used. The wireless communication system may operate, e.g., in accordance with the LTE-Advanced pro standard or the NR (5G), New Radio, standard.

The wireless network or communication system depicted in Fig. 1 may by a heterogeneous network having distinct overlaid networks, e.g., a network of macro cells with each macro cell including a macro base station, like base station gNB1 to gNB5, and a network of small cell base stations (not shown in Fig. 1), like femto or pico base stations.

In addition to the above described terrestrial wireless network also non-terrestrial wireless communication networks exist including space borne transceivers, like satellites, and/or airborne transceivers, like unmanned aircraft systems. The non-terrestrial wireless communication network or system may operate in a similar way as the terrestrial system described above with reference to Fig. 1, for example in accordance with the LTE-Advanced Pro standard or the NR (5G), new radio, standard.

In mobile communication networks, for example in a network like that described above with reference to Fig. 1, like an LTE or 5G/NR network, there may be UEs that communicate directly with each other over one or more sidelink (SL) channels, e.g., using the PC5 interface. UEs that communicate directly with each other over the sidelink may include vehicles communicating directly with other vehicles (V2V communication), vehicles communicating with other entities of the wireless communication network (V2X communication), for example roadside entities, like traffic lights, traffic signs, or pedestrians. Other UEs may not be vehicular related UEs and may comprise any of the above-mentioned devices. Such devices may also communicate directly with each other (D2D communication) using the SL channels.

When considering two UEs directly communicating with each other over the sidelink, both UEs may be served by the same base station so that the base station may provide sidelink resource allocation configuration or assistance for the UEs. For example, both UEs may be within the coverage area of a base station, like one of the base stations depicted in Fig. 1. This is referred to as an "in-coverage" scenario. Another scenario is referred to as an "out-of-coverage" scenario. It is noted that "out-of-coverage" does not mean that the two UEs are not within one of the cells depicted in Fig. 1, rather, it means that these UEs
- may not be connected to a base station, for example, they are not in an RRC connected state, so that the UEs do not receive from the base station any sidelink resource allocation configuration or assistance, and/or
- may be connected to the base station, but, for one or more reasons, the base station may not provide sidelink resource allocation configuration or assistance for the UEs, and/or
- may be connected to the base station that may not support NR V2X services, e.g. GSM, UMTS, LTE base stations.

When considering two UEs directly communicating with each other over the sidelink, e.g. using the PC5 interface, one of the UEs may also be connected with a BS, and may relay information from the BS to the other UE via the sidelink interface. The relaying may be performed in the same frequency band (in-band-relay) or another frequency band (out-of-band relay) may be used. In the first case, communication on the Uu and on the sidelink may be decoupled using different time slots as in time division duplex, TDD, systems.

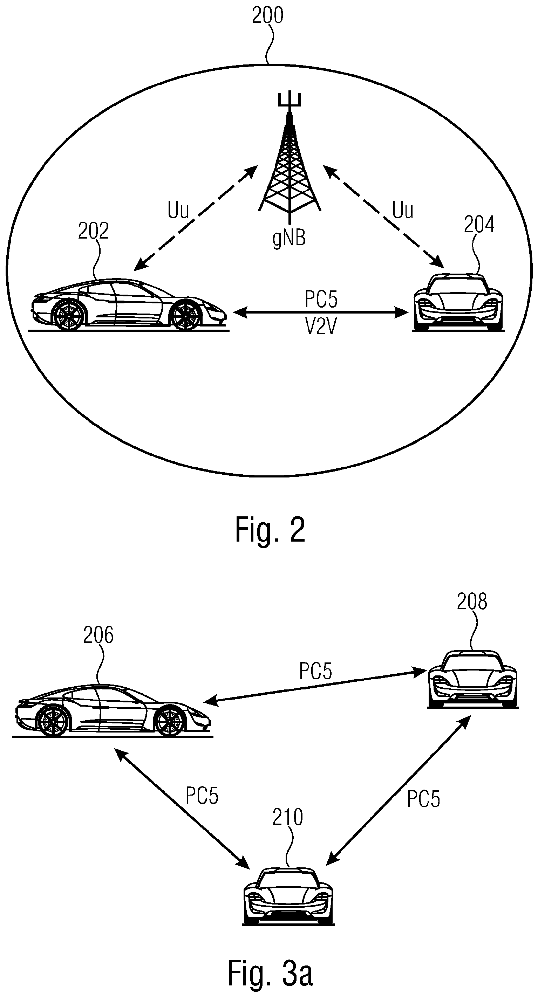

Fig. 2 is a schematic representation of an in-coverage scenario in which two UEs directly communicating with each other are both connected to a base station. The base station gNB has a coverage area that is schematically represented by the circle 200 which, basically, corresponds to the cell schematically represented in Fig. 1. The UEs directly communicating with each other include a first vehicle 202 and a second vehicle 204 both in the coverage area 200 of the base station gNB. Both vehicles 202, 204 are connected to the base station gNB and, in addition, they are connected directly with each other over the PC5 interface. The scheduling and/or interference management of the V2V traffic is assisted by the gNB via control signaling over the Uu interface, which is the radio interface between the base station and the UEs. In other words, the gNB provides SL resource allocation configuration or assistance for the UEs, and the gNB assigns the resources to be used for the V2V communication over the sidelink. This configuration is also referred to as a mode 1 configuration in NR V2X or as a mode 3 configuration in LTE V2X.

Fig. 3a is a schematic representation of an out-of-coverage scenario in which the UEs directly communicating with each other are either not connected to a base station, although they may be physically within a cell of a wireless communication network, or some or all of the UEs directly communicating with each other are to a base station but the base station does not provide for the SL resource allocation configuration or assistance. Three vehicles 206, 208 and 210 are shown directly communicating with each other over a sidelink, e.g., using the PC5 interface. The scheduling and/or interference management of the V2V traffic is based on algorithms implemented between the vehicles. This configuration is also referred to as a mode 2 configuration in NR V2X or as a mode 4 configuration in LTE V2X. As mentioned above, the scenario in Fig. 3a which is the out-of-coverage scenario does not necessarily mean that the respective mode 2 UEs (in NR) or mode 4 UEs (in LTE) are outside of the coverage 200 of a base station, rather, it means that the respective mode 2 UEs (in NR) or mode 4 UEs (in LTE) are not served by a base station, are not connected to the base station of the coverage area, or are connected to the base station but receive no SL resource allocation configuration or assistance from the base station. Thus, there may be situations in which, within the coverage area 200 shown in Fig. 2, in addition to the NR mode 1 or LTE mode 3 UEs 202, 204 also NR mode 2 or LTE mode 4 UEs 206, 208, 210 are present.

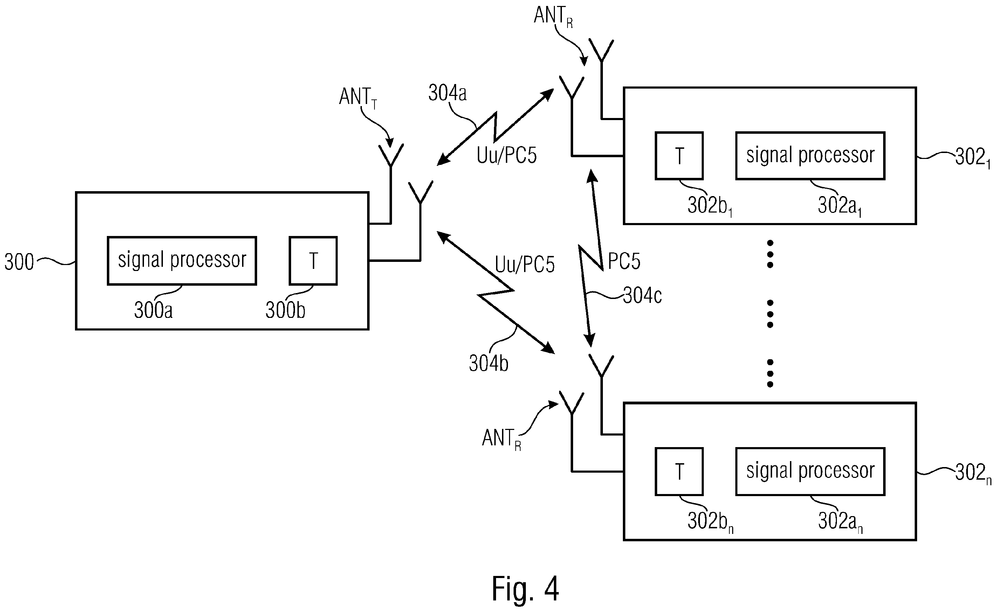

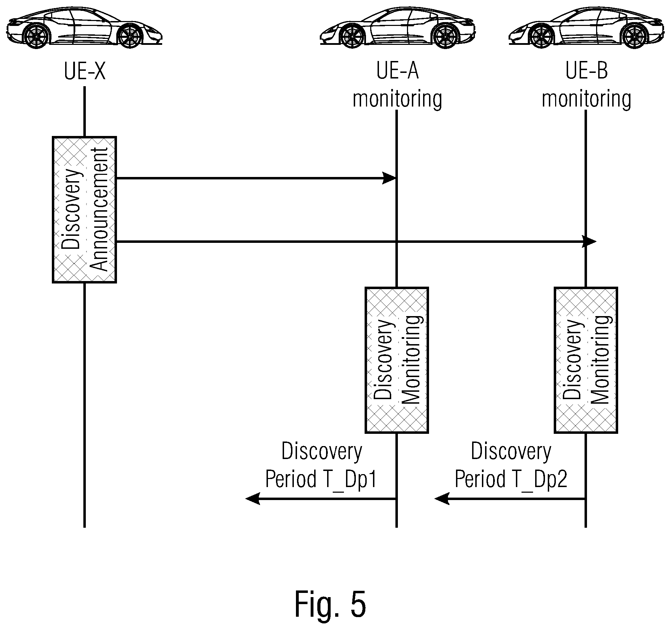

Naturally, it is also possible that the first vehicle 202 is covered by the gNB, i.e. connected with Uu to the gNB, wherein the second vehicle 204 is not covered by the gNB and only connected via the PC5 interface to the first vehicle 202, or that the second vehicle is connected via the PC5 interface to the first vehicle 202 but via Uu to another gNB, as will become clear from the discussion of Figs. 4 and 5.

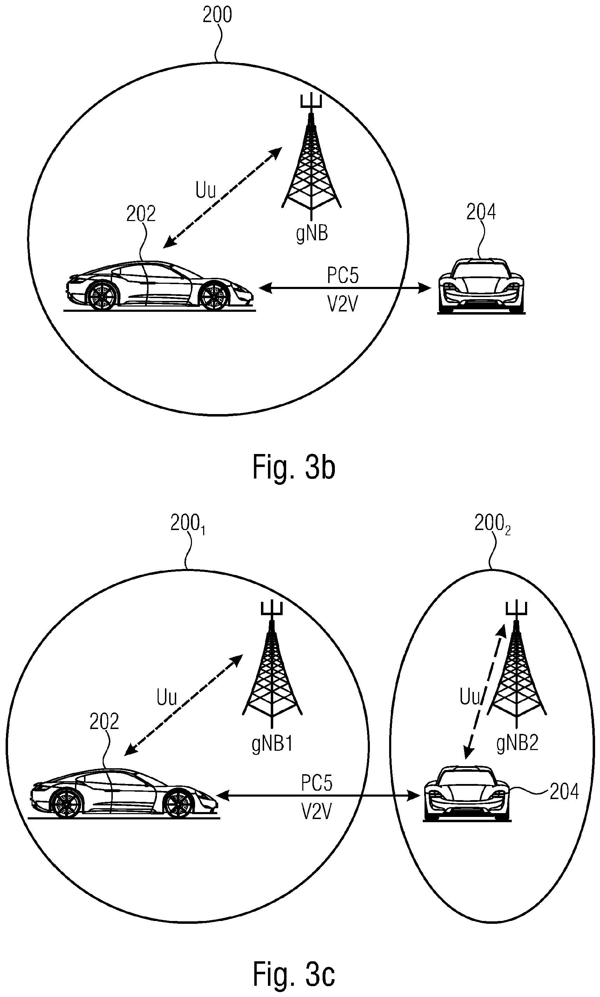

Fig. 3b is a schematic representation of a scenario in which two UEs directly communicating with each, wherein only one of the two UEs is connected to a base station. The base station gNB has a coverage area that is schematically represented by the circle 200 which, basically, corresponds to the cell schematically represented in Fig. 1. The UEs directly communicating with each other include a first vehicle 202 and a second vehicle 204, wherein only the first vehicle 202 is in the coverage area 200 of the base station gNB. Both vehicles 202, 204 are connected directly with each other over the PC5 interface.

Fig. 3c is a schematic representation of a scenario in which two UEs directly communicating with each, wherein the two UEs are connected to different base stations. The first base station gNB1 has a coverage area that is schematically represented by the first circle 2001, wherein the second station gNB2 has a coverage area that is schematically represented by the second circle 2002. The UEs directly communicating with each other include a first vehicle 202 and a second vehicle 204, wherein the first vehicle 202 is in the coverage area 2001 of the first base station gNB1 and connected to the first base station gNB1 via the Uu interface, wherein the second vehicle 204 is in the coverage area 2002 of the second base station gNB2 and connected to the second base station gNB2 via the Uu interface.

In a communication system as described above, such as NR Rel-16, sidelink focuses on supporting V2X related road safety services, aiming to provide support for broadcast, groupcast and unicast communications in both out-of-coverage and in-network coverage scenarios. Besides these communication scenarios, there is a need for sidelink-based relaying functionality, especially for sidelink/network coverage extension and power efficiency improvement, considering a wider range of applications and services.

From LTE Rel-13, the ProSe Direct Discovery Procedure (ProSe = Proximity Service) is known. The ProSe direct discovery procedure is used for a UE to discover or be discovered by other UE(s) in proximity over the PC5 interface. The UE can discover other UE(s) with interested application(s) and/or interested group(s) using the ProSe direct discovery procedure. This solution for this key issue should strive to achieve the common direct discovery procedure for discovering a 5G ProSe enabled UE, 5G ProSe UE-to-Network Relay and a 5G ProSe UE-to-UE Relay.

Any ProSe enabled UE may support the following functions [7]:
- Exchange of ProSe control information between ProSe-enabled UE and the ProSe function over PC3 reference point.
- Procedures for open and restricted ProSe direct discovery of other ProSe-enabled UEs over PC5 reference point.

The ProSe-enabled public safety UE may support the following functions [7]:
- Procedures for one-to-many ProSe direct communication over PC5 reference point.
- Procedures for one-to-one ProSe direct communication over PC5 reference point.
- Procedures to act as a ProSe UE-to-network relay. The remote UE communicates with the ProSe UE-to-network relay over PC5 reference point. The ProSe UE-to-network relay uses layer-3 packet forwarding.
- Exchange of control information between ProSe-UEs over PC5 reference point, e.g., for UE-to-network relay discovery and group member discovery.
- Exchange of ProSe control information between another ProSe-enabled UE and the ProSe function over PC3 reference point. In the ProSe UE-to-network relay case the remote UE will send this control information over PC5 user plane to be relayed over the LTE-Uu interface towards the ProSe function.
- Configuration of parameters (e.g., including IP addresses, ProSe layer-2 group IDs, group security material, radio resource parameters). These parameters can be preconfigured in the UE, or, if in coverage, provisioned by signalling over the PC3 reference point to the ProSe function in the network.

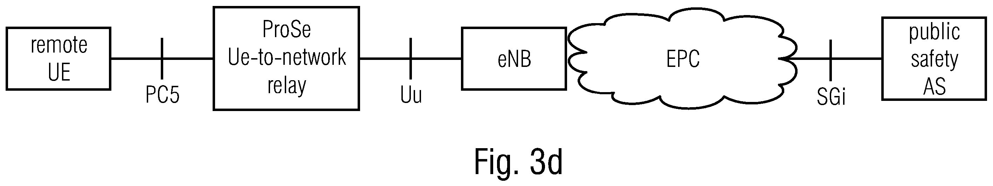

The ProSe UE-to-network relay entity provides the functionality to support connectivity to the network for remote UEs, as shown in Fig. 3d. Specifically, Fig. 3d shows a schematic view of an architecture model using a ProSe UE-to-network relay [7].

A UE is considered a remote UE for a certain ProSe UE-to-network relay if it has successfully established a PC5 link to this ProSe UE-to-network relay. A remote UE can be located within E-UTRAN coverage or outside of E-UTRAN coverage.

Thereby, note that if a remote UE maintains both, PC5 and Uu, the EPS core network entities on the Uu side of the remote UE are not aware of the ProSe UE-to-network relay path via PC5.

The ProSe UE-to-network relay shall relay unicast traffic (UL and DL) between the remote UE and the network. The ProSe UE-to-network relay shall provide generic function that can relay any IP traffic.

Two models for discovery are defined in [6], as will be described in the following.

### Model A ("I am here")

This model defines two roles for the UEs, which are ProSe enabled and are participating in ProSe direct discovery.
- Announcing UE: The UE announces certain information that could be used by UEs in proximity that have permission to discover.
- Monitoring UE: The UE that monitors certain information of interest in proximity of announcing UEs.

In this model, the announcing UE broadcasts discovery messages at pre-defined discovery intervals and the monitoring UEs that are interested in these messages read them and process them.

### Model B ("who is there?" / "are you there?")

This model, when restricted discovery type is used, defines two roles for the ProSe-enabled UEs that are participating in ProSe direct discovery:
- Discoverer UE: The UE transmits a request containing certain information about what it is interested to discover.
- Discoveree UE: The UE that receives the request message can respond with some information related to the discoverer's request.

It is equivalent to "who is there/are you there" since the discoverer UE sends information about other UEs that would like to receive responses from, e.g., the information can be about a ProSe application identity corresponding to a group and the members of the group can respond.

WO 2016/164808 A1 relates to realizing mobile relays for device-to-device (D2D) communications. Specifically, a method is described for a WTRU to act as a mobile relay, the method comprising the WTRU connecting to the network, the WTRU receiving a message from the network indicating that the WTRU is to act as a mobile relay for one or more devices outside of the coverage of the network, the WTRU discovering one or more devices outside of the coverage of the network, and the WTRU receiving a message from the out-of- coverage device that indicates that the out-of-coverage device has selected the WTRU to act as a mobile relay.

EP 3 229 549 A1 relates to a grouping procedure performed by a master mobile terminal for grouping with a remote mobile terminal. The master mobile terminal and the remote mobile terminal are connected to a radio base station. The master mobile terminal may serve as a relay for remote mobile terminals so as to relay communication between the remote mobile terminals and the radio base station. A transmitter and receiver of the master mobile terminal discovers the remote mobile terminal and an identifier of the remote mobile terminal. The transmitter transmits a group request message to the radio base station, which comprises the remote mobile terminal identifier and a request to group the remote mobile terminal with the master mobile terminal. The receiver receives a group request confirm message from the radio base station, confirming that the remote mobile terminal and the master mobile terminal are grouped together.

EP 2 833 694 A2 relates to a method of relay discovery and communication for a user equipment (UE) in a wireless communications system, including: receiving a first relay discovery request, from a remote UE which announces relay discovery requests; transmitting a relay discovery response including an identification of the UE, to the remote UE; receiving a second relay discovery request including the identification of the UE, from the remote UE; and activating a relay function to start relaying traffic of Proximity-based Service (ProSe) communication for the remote UE.

WO 2016/164582 A1 relates to sidelink direct discovery resource pool allocation for out-of-coverage wireless terminal. The wireless terminal is configured to receive an indication that the wireless terminal is to be configured for sidelink direct discovery, and, when the wireless terminal is out of network coverage, to obtain for a sidelink direct discovery operation a selected radio resource from a pool of radio resources which is preconfigured in the memory.

Starting from the above, there is a need for improvements or enhancements with respect to sidelink relaying discovery procedures.

It is noted that the information in the above section is only for enhancing the understanding of the background of the invention and therefore it may contain information that does not form prior art and is already known to a person of ordinary skill in the art.

Embodiments of the present invention are described herein making reference to the appended drawings.
- Fig. 1: shows a schematic representation of an example of a wireless communication system;
- Fig. 2: is a schematic representation of an in-coverage scenario in which UEs directly communicating with each other are connected to a base station;
- Fig. 3a: is a schematic representation of an out-of-coverage scenario in which UEs directly communicating with each other receive no SL resource allocation configuration or assistance from a base station;
- Fig. 3b: is a schematic representation of a partial out-of-coverage scenario in which some of the UEs directly communicating with each other receive no SL resource allocation configuration or assistance from a base station;
- Fig. 3c: is a schematic representation of an in-coverage scenario in which UEs directly communicating with each other are connected to different base stations;
- Fig. 3d: shows a schematic view of an architecture model using a ProSe UE-to-network relay [7];
- Fig. 4: is a schematic representation of a wireless communication system comprising a transceiver, like a base station or a relay, and a plurality of communication devices, like UEs, according to an embodiment;
- Fig. 5: shows a schematic view of an exemplarily discovery procedure via announcement, wherein it is exemplarily assumed that UE-X is the discoverer UE, and UE-A and UE-B are the discoveree UEs that could act as a potential relay UE;
- Fig. 6: shows a schematic view of an exemplary layer 2 discovery frame format;
- Fig. 7: shows a schematic view of an exemplary discovery procedure via Model B, wherein UE-X is the discoverer UE, and wherein UE-A and UE-B are the discoveree UEs that could act as a potential relay UE;
- Fig. 8: illustrates an example of a computer system on which units or modules as well as the steps of the methods described in accordance with the inventive approach may execute.

Equal or equivalent elements or elements with equal or equivalent functionality are denoted in the following description by equal or equivalent reference numerals.

In the following description, a plurality of details are set forth to provide a more thorough explanation of embodiments of the present invention. However, it will be apparent to one skilled in the art that embodiments of the present invention may be practiced without these specific details. In other instances, well-known structures and devices are shown in block diagram form rather than in detail in order to avoid obscuring embodiments of the present invention. In addition, features of the different embodiments described hereinafter may be combined with each other, unless specifically noted otherwise.

Embodiments of the present invention provide approaches for improving the sidelink relaying discovery procedures, so as to provide, for example, improvements, for example, in terms of power consumption, flexibility, complexity, forward compatibility, overhead, latency, robustness, reliability.

Embodiments of the present invention may be implemented in a wireless communication system as depicted in Fig. 1, Fig. 2, and Figs. 3a-c including base stations and users, like mobile terminals or loT devices. Fig. 4 is a schematic representation of a wireless communication system including a central transceiver, like a base station, and one or more transceivers 3021 to 302n, like user devices, UEs. The central transceiver 300 and the transceivers 302 may communicate via one or more wireless communication links or channels 304a, 304b, 304c, like a radio link. The central transceiver 300 may include one or more antennas ANTT or an antenna array having a plurality of antenna elements, a signal processor 300a and a transceiver unit 300b, coupled with each other. The transceivers 302 include one or more antennas ANTR or an antenna array having a plurality of antennas, a signal processor 302a1, 302an, and a transceiver unit 302b1, 302bn coupled with each other. The base station 300 and the UEs 302 may communicate via respective first wireless communication links 304a and 304b, like a radio link using the Uu interface, while the UEs 302 may communicate with each other via a second wireless communication link 304c, like a radio link using the PC5 interface. When the UEs are not served by the base station, are not be connected to a base station, for example, they are not in an RRC connected state, or, more generally, when no SL resource allocation configuration or assistance is provided by a base station, the UEs may communicate with each other over the sidelink. The system, the one or more UEs and the base stations may operate in accordance with the inventive teachings described herein.

Embodiments provide a transceiver [e.g., discoveree UE, announcing UE or relay capable UE] of a wireless communication system, wherein the transceiver is configured to operate in a [e.g., new radio, NR] sidelink in-coverage, out of coverage or partial coverage scenario [e.g., NR sidelink mode [e.g., mode 1 or mode 2]], in which resources for a sidelink communication [e.g., transmission and/or reception] are (pre-)configured by the wireless communication system or allocated or scheduled autonomously by the transceiver, wherein the transceiver is configured to receive [e.g., in a discovery mode of operation] a sidelink discovery signal [e.g., discovery announcement or discovery request or discovery message] from another transceiver [e.g., discoverer UE, monitoring UE or remote UE] of the wireless communication system, wherein the transceiver is configured or capable to act as a relay for the other transceiver [e.g., to relay] [e.g., in a relay mode of operation], [e.g., in response to the sidelink discovery signal and] if a discovery or sidelink criterion is fulfilled [e.g., if the transceiver matches discovery requirements [e.g., QoS, type of application, etc.] of the other transceiver [e.g., signaled by the sidelink discovery signal]], [e.g., by relaying] signals in at least one direction between the other transceiver and a further transceiver [e.g., UE or base station] of the wireless communication system.

In embodiments, the transceiver is configured or capable to relay signals in at least one direction between the other transceiver and a further transceiver [e.g., UE or base station] of the wireless communication system.

In embodiments, the transceiver is configured to operate, [e.g., in response to the sidelink discovery signal and] if the discovery criterion is fulfilled], in a relaying mode of operation, in which the transceiver relays signals in the at least one direction between the other transceiver and the further transceiver [e.g., UE or base station] of the wireless communication system.

In embodiments, the sidelink discovery signal comprises a discovery announcement.

In embodiments, the sidelink discovery signal is a sidelink discovery beacon.

In embodiments, the sidelink discovery beacon is transmitted as a standalone information element [e.g., before the first stage SCI].

In embodiments, the sidelink discovery beacon is transmitted punctured in the first or second stage SCI.

In embodiments, the sidelink discovery beacon comprises a discovery identification information [e.g., discovery ID indicating it is a discovery message]; and/or wherein the sidelink discovery beacon comprises an information describing a number of discovery occasions [e.g., single or multi shot] [e.g., which are spread across time and/or frequency].

In embodiments, the sidelink discovery signal is transmitted using specific discovery resources, e.g. resources included in specific resource pools for discovery.

In embodiments, the sidelink discovery signal is transmitted using any [e.g. common transmission or reception or exceptional or discovery resource pool or discovery transmission pool or discovery reception pool] sidelink resources.

In embodiments, an information [e.g., discovery ID and/or number of discovery occasions] required for identifying the sidelink discovery signal as discovery signal is pre-configured [e.g., when the transceiver operates in the out of coverage scenario], wherein an information [e.g., discovery ID and/or number of discovery occasions] required for identifying the sidelink discovery signal as discovery signal is configured by a base station of the wireless communication system [e.g., when the transceiver operates in the in-coverage scenario].

In embodiments, the transceiver is configured, in case that an exceptional or poor radio condition occurs [e.g., RLF , poor channel quality, poor coverage or out-of coverage], to stop the discovery procedure [e.g., stop operating in the discovery mode of operation] at least until the exceptional or poor radio condition is terminated.

In embodiments, the sidelink discovery signal is transmitted via a discovery channel.

In embodiments, the discovery channel [e.g. logical, physical or transport] is defined by at least one out of
- a discovery period,
- a duration of a resource validity,
- an information from the time/ frequency resource location(s) of resource pools for direct communication or exclusively for discovery in the first or second stage sidelink control information, SCI,
- a destination ID,
- a source or discovery ID [e.g. logical or physical discovery ID].

In embodiments, the discovery channel [e.g. logical, physical or transport] is pre-configured [e.g., in case that the transceiver is operating in the out of coverage scenario].

In embodiments, the discovery channel [e.g. logical, physical or transport] is configured by a base station of the wireless communication system [e.g., via higher layers RRC, PC5-RRC or PC5-S or MAC].

In embodiments, a frame type of the sidelink discovery signal indicates that the sidelink discovery signal carries a discovery message.

In embodiments, the frame type comprises a discovery ID [e.g., of x bits, such as 16 bits] that indicates that the sidelink discovery signal carries a discovery message [e.g., which helps in identification at the access stratum, AS, that this is a discovery message].

For example, the discovery ID could be further split as L2 Destination discovery ID (e.g. x bits) and L2 source discovery ID (e.g. x bits).

In embodiments, a payload size of the sidelink discovery message depends on at least one out of
- a used discovery procedure [e.g., Model 'A' discovery or Model 'B' discovery procedure,
- a QoS [e.g., latency, reliability, data rate] of the respective transceiver,
- a type of service the respective transceiver is supporting [e.g. commercial vs. public safety, and restricted vs. open],
- a minimum communication range same as sidelink,
- a relay range / distance [e.g., in case of in-vehicle relay or in a parking lot. The range of discovery should be limited].

In embodiments, the transceiver is configured to receive the sidelink discovery signal in a discovery mode of operation.

In embodiments, the transceiver is configured to only operate in the discovery mode of operation in response to an discovery authorization message [e.g., received from a base station or higher layer] authorizing the discovery mode of operation.

In embodiments, an information [e.g., regarding the discovery channel] required for receiving the sidelink discovery signal is pre-configured [e.g., when the transceiver operates in the out of coverage scenario], wherein an information [e.g., regarding the discovery channel] required for receiving the sidelink discovery signal is configured by a base station of the wireless communication system [e.g., when the transceiver operates in the in-coverage scenario].

In embodiments, the transceiver is configured, in case that an exceptional or poor radio condition occurs [e.g., RLF, poor channel quality, poor coverage or out-of coverage], to stop the discovery procedure [e.g., stop operating in the discovery mode of operation] at least until the exceptional or poor radio condition is terminated.

In embodiments, the sidelink discovery signal comprises a discovery request.

In embodiments, the discovery request comprises in information describing at least one out of
- a validity timer describing a time period the discovery request is valid,
- a QoS supported by the transceiver or the other transceiver [e.g., discoverer or discoveree UE] [e.g., this could help in deciding which UEs response message for e.g. discoverer UE accepts or whether the UE responds to the discovery request [e.g. in case the required QoS is not met, the UE may not respond] at all or respond with its available / offered (e.g. lower) QoS],
- a type of service [e.g. public safety or commercial use cases].

In embodiments, the transceiver is configured to transmit [e.g., in the discovery mode of operation], in response to the reception of the sidelink discovery signal, a sidelink discovery response signal to the other transceiver.

In embodiments, the sidelink discovery response signal comprises a sidelink discovery response.

In embodiments, the sidelink discovery response comprises an information describing at least one out of
- a QoS supported by the transceiver,
- a type of service supported by the transceiver.

In embodiments, the relaying criterion indicates that a type of service [e.g., to be relayed by the transceiver from the other transceiver [e.g., as indicated by the sidelink discovery signal] matches a type of service signaled by a higher layer [e.g., PC3, NAS, application layer level and/or access stratum, AS].

In embodiments, the transceiver is part of a group of transceivers, wherein the transceiver is configured to transmit a sidelink indication [e.g. timestamp, timer, counter, group member ID] [e.g., included in its announcement message or solicitation message] indicating when and which member of the group of transceivers should respond.

In embodiments, the transceiver is configured to determine, based on a minimum communication range and/or a sidelink measurement [e.g., RSSI, CSI], which transceivers in proximity will receive the discovery announcement message [e.g., Model A] or which can send a response to solicitation message [e.g., Model B].

In embodiments, the transceiver is a user equipment.

Further embodiments provide a transceiver [e.g., discoverer UE or remote UE] of a wireless communication system, wherein the transceiver is configured to operate in a [e.g., new radio, NR] sidelink in-coverage, out of coverage or partial coverage scenario [e.g., NR sidelink mode [e.g., mode 1 or mode 2]], in which resources for a sidelink communication [e.g., transmission and/or reception] are (pre-)configured by the wireless communication system or allocated or scheduled autonomously by the transceiver, wherein the transceiver is configured to transmit [e.g., in a discovery mode of operation] a sidelink discovery signal [e.g., discovery announcement or discovery request] to a candidate relaying transceiver [e.g., discoveree UE, announcing UE or relay capable UE] of the wireless communication system, wherein the transceiver is configured to select the candidate relaying transceiver as relaying transceiver if a relaying criterion is fulfilled.

In embodiments, the transceiver is configured to transmit or receive signals that are relayed by the relaying transceiver.

In embodiments, the sidelink discovery signal comprises a discovery announcement.

In embodiments, the sidelink discovery signal is a sidelink discovery beacon.

In embodiments, the transceiver is configured to transmit the sidelink discovery beacon as a standalone information element [e.g., before the first stage SCI].

In embodiments, the transceiver is configured to transmit the sidelink discovery beacon punctured in the first or second stage SCI.

In embodiments, the sidelink discovery beacon comprises a discovery identification information [e.g., discovery ID indicating it is a discovery message]; and/or wherein the sidelink discovery beacon comprises an information describing a number of discovery occasions [e.g., single or multi shot] [e.g., which are spread across time and/or frequency].

In embodiments, the transceiver is configured to transmit the sidelink discovery signal using specific discovery resources.

In embodiments, the transceiver is configured to transmit the sidelink discovery signal using any [e.g. common transmission or reception or exceptional] sidelink resources.

In embodiments, the transceiver is configured, in case that an exceptional or poor radio condition occurs [e.g., RLF, poor channel quality, poor coverage or out of coverage], to stop the discovery procedure [e.g., stop operating in the discovery mode of operation] at least until the exceptional or poor radio condition is terminated.

In embodiments, the transceiver is configured to transmit the sidelink discovery signal via a discovery channel.

In embodiments, the discovery channel is defined by at least one out of
- a discovery period,
- a duration of a resource validity,
- an information from the time/ frequency resource location(s) of resource pools for direct communication or exclusively for discovery in the first or second stage sidelink control information, SCI,
- a destination ID,
- a source or discovery ID.

In embodiments, the discovery channel is pre-configured [e.g., in case that the transceiver is operating in the out of coverage scenario].

In embodiments, the discovery channel is configured by a base station of the wireless communication system [e.g., via higher layers RRC].

In embodiments, the transceiver is configured to transmit the sidelink discovery signal in a discovery mode of operation.

In embodiments, the transceiver is configured to only operate in the discovery mode of operation in response to a discovery authorization message [e.g., received from a base station or higher layer] authorizing the discovery mode of operation.

In embodiments, parameters [e.g., regarding the discovery channel] for transmitting the sidelink discovery signal are pre-configured [e.g., when the transceiver operates in the out of coverage scenario], wherein parameters [e.g., regarding the discovery channel] for transmitting the sidelink discovery signal are configured by a base station of the wireless communication system [e.g., when the transceiver operates in the in-coverage scenario].

In embodiments, the transceiver is configured, in case that an exceptional or poor radio condition occurs [e.g., RLF, poor channel quality, poor coverage or out of coverage], to stop the discovery procedure [e.g., stop operating in the discovery mode of operation] at least until the exceptional or poor radio condition is terminated.

In embodiments, the sidelink discovery signal comprises a discovery request.

In embodiments, the discovery request comprises in information describing at least one out of
- a validity timer describing a time period the discovery request is valid,
- a QoS supported by the transceiver or the other transceiver [e.g., discoverer or discoveree UE] [e.g., this could help in deciding which UEs response message for e.g. discoverer UE accepts],
- a type of service [e.g. public safety or commercial use cases].

In embodiments, the transceiver is configured to receive [e.g., in the discovery mode of operation], in response to the transmission of the sidelink discovery signal, a sidelink discovery response signal.

In embodiments, the transceiver is configured to re-initiate the discovery procedure [e.g., retransmit the discovery signal] in case that no discovery response is received.

In embodiments, the sidelink discovery response signal comprises a sidelink discovery response.

In embodiments, the sidelink discovery response comprises an information describing at least one out of
- a QoS supported by the transceiver,
- a type of service supported by the transceiver.
- a timestamp, timer, counter or group member ID.

In embodiments, the relaying criterion indicates that a type of service [e.g., to be relayed by the transceiver from the other transceiver [e.g., as indicated by the sidelink discovery signal] matches a type of service signaled by a higher layer [e.g., PC3, NAS, application layer level and/or access stratum, AS].

In embodiments, a destination layer identification [e.g., layer 2 ID] is assigned to the ID, wherein a discovery ID included in the sidelink discovery signal matches the destination layer identification.

In embodiments, the transceiver is part of a group of transceivers, wherein the transceiver is configured to receive a sidelink indication [e.g. timestamp, timer, counter, group member ID] [e.g., included in its announcement message or solicitation message] indicating when and which member of the group of transceivers should respond.

In embodiments, the transceiver is configured to determine, based on a minimum communication range and/or a sidelink measurement [e.g., RSSI, CSI], which transceivers in proximity will receive the discovery announcement message [e.g., Model A] or which can send a response to solicitation message [e.g., Model B].

In embodiments, the transceiver is configured to align the transmission of the sidelink discovery signal with a HARQ feedback.

In embodiments, the transceiver is configured to receive, in the sidelink in-coverage, out of coverage or partial coverage scenario [e.g., from a base station and/or another transceiver of the wireless communication system], sidelink signals using a discontinuous reception, DRX, mode of operation, wherein cycles of the discontinuous reception, DRX, mode of operation are aligned with discovery occasions.

In embodiments, the transceiver is battery operated, or wherein the transceiver could be restricted to be considered / used as a relaying UE [e.g. a battery based transceiver could be excluded from being considered as relaying UE or considered for e.g. a limited period of time and / or limited transmission power or only in case defined conditions (e.g. high QoS) are fulfilled as a relaying UE.]

In embodiments, the transceiver is a user equipment.

Further embodiments provide a method for operating a transceiver [e.g., discoveree UE, announcing UE or relay capable UE] of a wireless communication system. The method comprises a step of operating the transceiver in a [e.g., new radio, NR] sidelink in-coverage, out of coverage or partial coverage scenario [e.g., NR sidelink mode [e.g., mode 1 or mode 2]], in which resources for a sidelink communication [e.g., transmission and/or reception] are (pre-)configured by the wireless communication system or allocated or scheduled autonomously by the transceiver. Further, the method comprises a step of receiving [e.g., in a discovery mode of operation] a sidelink discovery signal [e.g., discovery announcement or discovery request or discovery message] from another transceiver [e.g., discoverer UE, monitoring UE or remote UE] of the wireless communication system. Further, the method comprises a step of relaying, [e.g., in response to the sidelink discovery signal and] if a discovery or sidelink criterion is fulfilled [e.g., if the transceiver matches discovery requirements [e.g., QoS, type of application, etc.] of the other transceiver [e.g., signaled by the sidelink discovery signal]], signals in at least one direction between the other transceiver and a further transceiver [e.g., UE or base station] of the wireless communication system.

Further embodiments provide a method for operating a transceiver [e.g., discoverer UE or remote UE] of a wireless communication system. The method comprises a step of operating the transceiver in a [e.g., new radio, NR] sidelink in-coverage, out of coverage or partial coverage scenario [e.g., NR sidelink mode [e.g., mode 1 or mode 2]], in which resources for a sidelink communication [e.g., transmission and/or reception] are (pre-)configured by the wireless communication system or allocated or scheduled autonomously by the transceiver.. Further, the method comprises a step of transmitting [e.g., in a discovery mode of operation] a sidelink discovery signal [e.g., discovery announcement or discovery request] to a candidate relaying transceiver [e.g., discoveree UE, announcing UE or relay capable UE] of the wireless communication system. Further, the method comprises a step of selecting the candidate relaying transceiver as relaying transceiver if a relaying criterion is fulfilled.

In embodiments, discovery can be defined as the mechanism that detects and identifies another UE in proximity, e.g., as a potential entity used for selection as relay UE that matches the requirements, e.g., w.r.t QoS of the discoverer UE or the type of application the UE is supporting.

In embodiments, mechanisms that can support upper layer procedures for discovery in case of a sidelink relay are described. Following issues are addressed in the following embodiments for both Model A and Model B discovery procedure including both open and restricted:
- Discovery operation including both discoverer and discoveree UEs considering at least different application requirements, QoS requirements, and different coverage scenarios, i.e., out of coverage, partial coverage and in coverage.
- Group discovery procedure, where the group information comes from application layer. This also includes the inclusion of at least QoS requirements, and different coverage scenarios, i.e., out of coverage, partial coverage and in coverage.
- Discovery operation for UEs with power constraints.

In embodiments, a discoverer UE and a discoveree UE could both be a remote UE or a relay UE.

Embodiments described herein support the SA requirements for sidelink-based UE-to-network and UE-to-UE relay.

Embodiments described herein support upper layer operations of discovery model/procedure for sidelink relaying, assuming no new physical layer channel / signal [RAN2].

In embodiments, it is assumed that UE-to-network relay and UE-to-UE relay use the same relaying solution.

In embodiments, forward compatibility for multi-hop relay support for future release is taken into account.

In embodiments, for layer-2 UE-to-network relay, the architecture of end-to-end PDCP and hop-by-hop RLC is taken as starting point.

In embodiments, the following definition in context of relay is applicable:
- UE-to-Network Relay UE (or relay UE): A UE that provides functionality to support connectivity to the network for Remote UE(s).
- Remote UE: A relay-enabled UE that communicates with a DN (direct network) via a UE-to-Network Relay.

Subsequently, embodiments of the present invention are described in further detail.

### Embodiment 1: Enhanced upper layer discovery procedures

This embodiment discusses enhancements to the well-defined discovery models namely Model A and Model B. Model A means that a certain number of UEs are making discovery announcements. On the other hand, Model B is an event-driven discovery where discovery request and response messages are exchanged between the UEs. For example, in case of Model B as the discoverer UE will be collecting response messages from the discoveree UE, a timely execution of the discovery procedure is needed, e.g., because of changing radio conditions. Hence, latency is an important aspect to be considered. In addition, collision handling of simultaneous response messages should be taken into consideration. This implies reliability for Model B should also be considered.

### Discovery type 1 (Model A)

Subsequently, an exemplarily embodiment of discovery type 1 is described.

Embodiments provide a discover via announcement. Following along the line of Model 'A' ("I am here") of discovery from D2D described above, the following general procedure can be established, as shown in Fig. 5. Specifically, Fig. 5 shows a schematic view of an exemplarily discovery procedure via announcement. Thereby, in Fig. 5 it is exemplarily assumed that UE-X is the discoverer UE, wherein UE-A and UE-B are the discoveree UEs that could act as a potential relay UE.

### 1. Option: Discovery beacon

In this procedure a sidelink discovery beacon is transmitted as a standalone information element before the first stage SCI or punctured in the first or second stage SCI, which contains
- the discovery identification information, e.g., discovery ID indicating it is a discovery message, and/or
- the number of discovery occasions (single or multi shot) which could be spread across time and/or frequency.

Standalone sidelink discovery information could be either adjacent to the first stage SCI or non-adjacent. The UEs in the proximity based on their supported traffic type (e.g., periodic / aperiodic), QoS including the supported MCR (minimum communication range) try to decode this sidelink discovery beacon opportunistically based on the configured discovery period by the higher layers. This discovery beacon could be included in another format of the SCI, e.g., as SCI-format 0-x. The resources used for transmission of discovery information could be either the normal resources or specific discovery resources. When the UEs are in out of coverage scenario or in mode 2 in general the information regarding the identification of the message as discovery, e.g., via discovery ID and the number of discovery occasions, could be pre-configured for the UE. On the other hand, when the UEs are in-coverage scenario (e.g., mode 1 or mode 2), then this information of discovery message identification or discovery occasions can be configured by the base station via higher layers, e.g., RRC.

Additionally, when the UEs might be experiencing any kind of exceptional cases, e.g., radio link failure (RLF), then the following options are possible:
- First, it is possible that the UEs (either / both discoverer and discoveree) are not authorized by higher layers, e.g., PC3 or NAS, to start the discovery procedure at all. This implies not having the option to behave as a relay UE at all.
- Second, in case RLF happens after the upper layers have granted the UE authorization for discovery then no discovery procedure should be executed until, for example, the RLF is recovered or a new connection is again established.
   - If the recovery from RLF is not possible then the discovery procedure starts based on, for example, pre-configuration.
   - The resources used in this case for discovery could be the exceptional resources.

### 2. Option: Discovery channel

Alternatively, a discovery channel for NR-V2X can be defined which optionally contains one or more (e.g., all or either) of the following parameters:
- the discovery period (e.g., Time Discovery Period_1 (TDp_1), TDp_2),
- duration of the resource validity,
- information from the first or second stage SCI of the time / frequency resource location(s) of resource pools for direct communication or exclusively for discovery,
- the destination ID, and / or source or discovery ID.

In embodiments, the authorization for a UE to act as a discoverer UE or a discoveree UE can happen in the higher layers. When the UEs are in out of coverage scenario, the information regarding the discovery channel as mentioned above could be pre-configured for the UE. On the other hand, when the UEs are in in coverage scenario (mode 1 or mode 2), then the base station can configure this information regarding discovery channel via higher layers, e.g., RRC. Additionally, when the UEs might be experiencing any kind of exceptional cases, e.g., RLF, then following options are possible:
- First, it is possible that higher layers, e.g., PC3 or NAS, have not authorized the UEs (both discoverer and discoveree) to start the discovery procedure at all. This implies not having the option to behave as a relay UE at all.
- Second, in case RLF happens after the upper layers have granted the UE authorization for discovery then no discovery procedure should be executed until, for example, the RLF is recovered or a new connection is again established.
   - If the recovery from RLF is not possible then the discovery procedure starts based on, for example, pre-configuration.
   - The resources used in this case for discovery could be the exceptional resources.

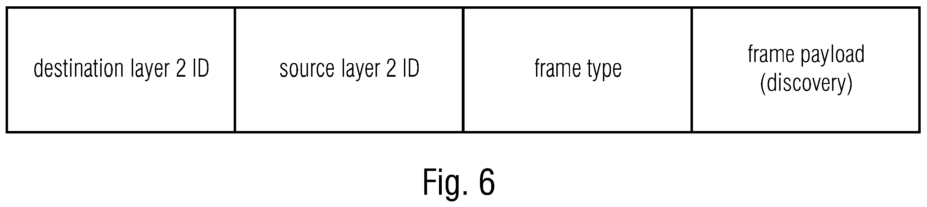

In embodiments, the signaling format for discovery in both option 1 and option 2 can be carried within the layer 2 frame for PC5- direct communication. The Layer 2 frame for discovery might be as shown in Fig. 6.

In detail, Fig. 6 shows a schematic view of an exemplary layer 2 discovery frame format. Thereby, any parameter is optional and the sequence of the parameters could be changed [TR 22.752]. In other words, in Fig. 5 an example of the layer 2 discovery frame format is shown: any parameter/ field in the discovery frame format is optional, the sequence of the parameters are exchangeable:
- Destination layer 2 ID indicates the intended Rx which could refer to of any cast type, e.g., unicast, groupcast or broadcast. Source layer 2 ID indicated the TX which starts the transmission.
- Frame type here indicates that this message is the discovery message. This could, for example, include a discovery ID of x bits (e.g., 16 bits) which helps in identification at the access stratum that this is a discovery message.
   - This discovery ID could be further split as L2 Destination Discovery ID (e.g., x bits) and L2 Source Discovery ID (e.g., x bits)
- The payload size might differ based on various conditions or parameters, for example,
   - if it is Model 'A' discovery or Model 'B' discovery procedure,
   - the QoS, e.g., latency, reliability, data rate of the UE,
   - the type of service UE is supporting, e.g., commercial vs. public safety, and restricted vs. open,
   - minimum communication range same as sidelink,
   - relay range / distance, e.g., in case of in-vehicle relay or in a parking lot. The range of discovery can be limited.

In embodiments, a mapping could be defined between the possible payload size for discovery and the various conditions or parameters. This mapping can then make the discovery procedure transparent to the access stratum, for example, via an identifier.

### Discovery type 2 (Model B)

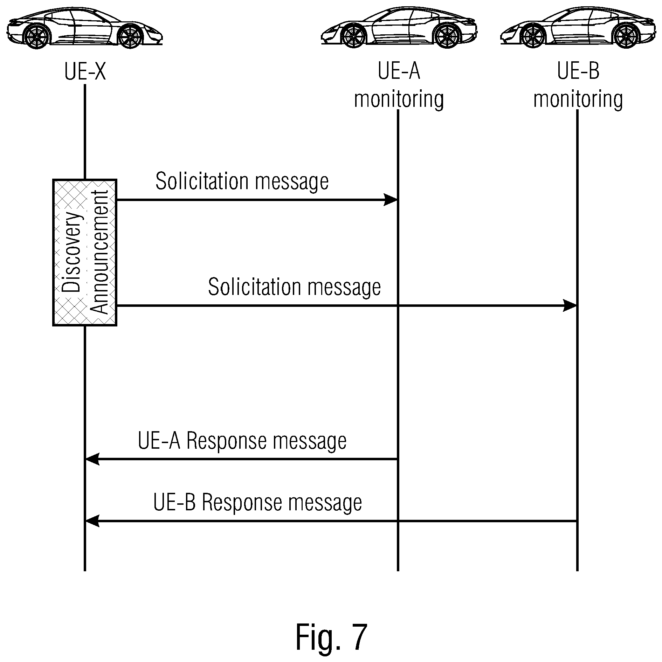

In embodiments, the discoverer UE can send a solicitation message, which contains the information about the discovery interest of the discoverer UE. The discoveree UE responds back via a response message once it receives the solicitation message, as shown in Fig. 7.

Specifically, Fig. 7 shows a schematic view of an exemplary discovery procedure via Model B. Thereby, in Fig. 7, UE-X is the discoverer UE, wherein UE-A and UE-B are the discoveree UEs that could act as a potential relay UE.

In embodiments, similar to the case of Model A, authorization for a UE to act as a Disoverer UE or a Discoveree UE can happen in the higher layers. In addition, both, the options for discovery beacon and discovery channel are applicable here in case of Model B as well.

In embodiments, the model B discovery feature differs from Model A in terms of the feedback of the response messages pertaining to a discovery solicitation message from a UE. Some additional criteria's to be considered pertaining to the response-solicitation message flow can be as follows:
- QoS supported by the UE. This could help in deciding which UEs response message, for example, UE-X accepts. If the UE-X is supporting a mission critical service with ultra-low latency and high reliability, then it can just consider, for example, the response of the nearest UE, e.g., UE-A in Fig. 7.
   - If the discoveree UE knows that it cannot meet the discoverer UEs QoS requirement, then it may not send back a response message or respond with its offered QoS.
- The type of service, e.g., public safety or commercial use cases could be one criteria for the UE to accept a certain UEs response message.
- A validity timer could be pre-defined by the UE initiating the discovery based on which the discoveree UE could decide if it should send a response back or not.
- In case of no response or a failure of reception of any or all response message, the discoverer UE can either initiate one more time the discovery procedure or stop the entire procedure altogether.

In embodiments, the Layer 2 frame format for discovery defined in the previous section is applicable for Model B as well (cf. Fig. 6).

### Embodiment 2: Group Discovery Procedure (including unicast)

Subsequently, additional discovery procedures that might be needed in case of unicast or groupcast are described. For groupcast, it is assumed that the application layer will provide the group-specific information.

It is possible that several upper layer services i.e. w.r.t to use cases like public safety, commercial, open / restricted discovery are distributed in UE in the vicinity. In embodiments, the discovery procedure can take into account the number of active services (e.g., at both the application layer level and Access Stratum (AS)) and the individual group size supported for each service. Therefore, during the authorization procedure, the upper layers (e.g., PC3 or NAS) can take into account the services the discoverer and discoveree UE are associated to. A precedence order might be used for granting the permission to start the discovery procedure based on the type of service. For example, public safety can have the highest priority, then commercial services, followed by open / restricted discovery.

Thereby, the above paragraph is applicable for broadcast as well.

In embodiments, at the AS level, the UEs are assigned a destination layer 2 ID and the frame type has an identifier for discovery, e.g., discovery ID, based on the higher layers. Thereby, it can be made sure that the destination layer 2 ID and an identifier for discovery are meant for the same service the UEs in a group are supporting. This will ensure that when UEs are sending discovery messages using, for example, PC5-S signaling or via PC5-RRC or via SCI or via discovery channel, the correct UEs respond, e.g., in case of Model B. Therefore, collisions of response messages is avoidable. Another way could be in case of a group lead UE it can assign an indication (e.g., timestamp, timer, counter, group member ID) in its announcement message or solicitation message when and which group member should respond.

In embodiments, in case of dynamic group, i.e., with no group lead then minimum communication range (MCR) or any kind of sidelink measurement, e.g., RSSI threshold, CSI could be used for determining which UEs will receive the discovery announcement message (Model A) or which can send a response to solicitation message (Model B). In addition, in case of model B, an alignment might be needed between the HARQ feedback and discovery response message. Discovery related Information element could be added, for example, in PC5-RRC or PC-S.

In embodiments, in case of a UE to Network relay, the base station can decide or instruct the UEs in the group with respect to the discovery procedure. The base station is aware of UEs location, hence can assist in helping other UEs in their respective discovery procedures.

In embodiments, in case of unicast, the UEs interested in discovery procedure can exchange via PC5-S signaling the type of discovery model preferred, open or restricted and the type of service they are supporting.

### Embodiment 3: Discovery Procedure for Power constrained UEs

Subsequently, the discovery procedure in case of power constrained UEs, for example, pedestrian UEs, is described. In this case, as the UEs will be supporting DRX it is important that the DRX cycles are aligned with the discovery occasions. For example, a new long or short DRX cycles can be defined for the UEs that have the discovery enabled. For example, if the discovery payload is big then the UE might follow the longer DRX value in order to give window to the UE to complete the discovery procedure. On the other hand, if the UEs discovery payload is small, for example, for public safety cases a short DRX cycle might be sufficient to complete the discovery procedure. The respective IE for SL-DRX can include another set of DRX values w.r.t discovery procedure. The DRX values might also differ based on the Model A or Model B discovery.

Battery-based UEs could also indicate restriction to be used as relay to avoid to high power consumption. With these types of UEs could be excluded from being considered as relay or only be considered for a specific period or in case QoS, e.g., priority exceeds a defined threshold.

### Further embodiments

Although some aspects of the described concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

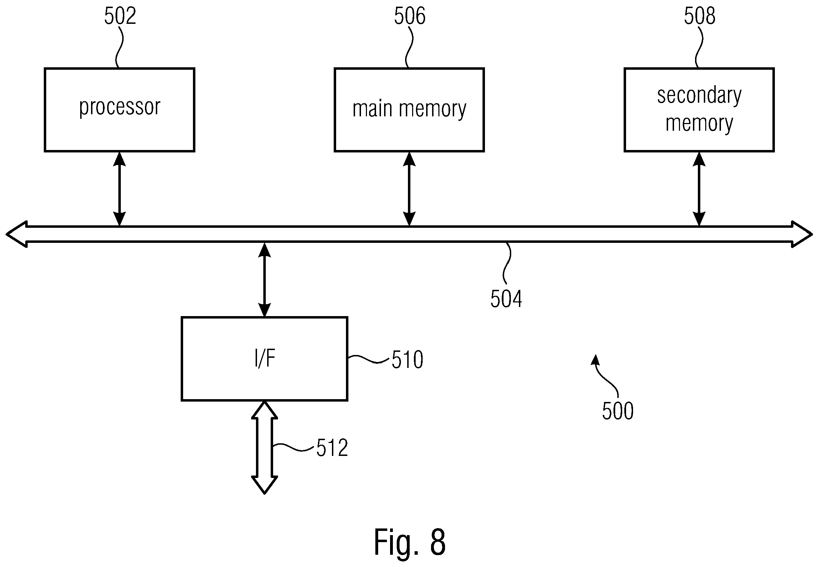

Various elements and features of the present invention may be implemented in hardware using analog and/or digital circuits, in software, through the execution of instructions by one or more general purpose or special-purpose processors, or as a combination of hardware and software. For example, embodiments of the present invention may be implemented in the environment of a computer system or another processing system. Fig. 8 illustrates an example of a computer system 500. The units or modules as well as the steps of the methods performed by these units may execute on one or more computer systems 500. The computer system 500 includes one or more processors 502, like a special purpose or a general-purpose digital signal processor. The processor 502 is connected to a communication infrastructure 504, like a bus or a network. The computer system 500 includes a main memory 506, e.g., a random-access memory (RAM), and a secondary memory 508, e.g., a hard disk drive and/or a removable storage drive. The secondary memory 508 may allow computer programs or other instructions to be loaded into the computer system 500. The computer system 500 may further include a communications interface 510 to allow software and data to be transferred between computer system 500 and external devices. The communication may be in the from electronic, electromagnetic, optical, or other signals capable of being handled by a communications interface. The communication may use a wire or a cable, fiber optics, a phone line, a cellular phone link, an RF link and other communications channels 512.

The terms "computer program medium" and "computer readable medium" are used to generally refer to tangible storage media such as removable storage units or a hard disk installed in a hard disk drive. These computer program products are means for providing software to the computer system 500. The computer programs, also referred to as computer control logic, are stored in main memory 506 and/or secondary memory 508. Computer programs may also be received via the communications interface 510. The computer program, when executed, enables the computer system 500 to implement the present invention. In particular, the computer program, when executed, enables processor 502 to implement the processes of the present invention, such as any of the methods described herein. Accordingly, such a computer program may represent a controller of the computer system 500. Where the disclosure is implemented using software, the software may be stored in a computer program product and loaded into computer system 500 using a removable storage drive, an interface, like communications interface 510.

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention may be implemented as a computer program product with a program code, the program code being operative for performing one of the methods when the computer program product runs on a computer. The program code may for example be stored on a machine-readable carrier.

Other embodiments comprise the computer program for performing one of the methods described herein, stored on a machine-readable carrier. In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein are apparent to others skilled in the art. It is the intent, therefore, to be limited only by the scope of the impending patent claims and not by the specific details presented by way of description and explanation of the embodiments herein.

### References

[1] TR 36.746 Study on further enhancements to LTE Device to Device (D2D), User Equipment (UE) to network relays for Internet of Things (IoT) and wearables; (Release 15)
[2] TS 23.287 Architecture enhancements for 5G System (5GS) to support Vehicle-to-Everything (V2X) services; (Release 16)
[3] TR 23.752 Study on system enhancement for Proximity based Services (ProSe) in the 5G System (5GS); (Release 17)
[4] TS 23.275
[5] RP 192753
[6] TR 23.752
[7] TS 23.303

### Abbreviations

- MCR: minimum communication range
- NR: new radio
- LTE: long term evolution
- UMTS: universal mobile telecommunication system
- UE: user equipment
- BS: base station
- NB: node B
- D2D: device-to-device
- V2V: vehicle-to-vehicle
- V2X: vehicle-to-everything
- IoT: internet of things
- PDSCH: physical downlink shared channel
- PDCCH: physical downlink control channel
- PUSCH: physical uplink shared channel
- PUCCH: physical uplink control channel
- PSSCH: physical sidelink shared channel
- PSCCH: physical sidelink control channel
- PBCH: physical broadcast channel
- PRACH: physical random access channel
- DCI: downlink control information
- SCI: sidelink control information
- UCI: uplink control information
- SIB: system information block
- MIB: master information block
- TTI: transmission time interval
- SL: sidelink
- RAN: radio access networks
- RS: reference symbols/signal
- OFDM: orthogonal frequency-division multiplexing
- TDD: time division duplex

## Claims

1. Transceiver of a wireless communication system,
wherein the transceiver is configured to operate in a sidelink in-coverage, out of coverage or partial coverage scenario, in which resources for a sidelink communication are configured or preconfigured by the wireless communication system or allocated or scheduled autonomously by the transceiver,
wherein the transceiver is configured to transmit a sidelink discovery signal to a candidate relaying transceiver of the wireless communication system,
wherein the transceiver is configured to select the candidate relaying transceiver as relaying transceiver if a relaying criterion is fulfilled,
**characterized in that** the sidelink discovery signal is transmitted via a discovery channel,
wherein the discovery channel is defined by a destination ID.

2. The transceiver according to the preceding claim,
wherein the discovery channel is further defined by at least one out of
- a discovery period,
- a duration of a resource validity,
- an information from the time/ frequency resource location(s) of resource pools for direct communication or exclusively for discovery in the first or second stage sidelink control information, SCI,
- a source or discovery ID

3. Transceiver according to one of the preceding claims,
wherein the transceiver is configured to transmit or receive signals that are relayed by the relaying transceiver.

4. Transceiver according to the preceding claim,
wherein the sidelink discovery signal comprises a discovery announcement.

5. Transceiver according to one of the preceding claims,
wherein the transceiver is configured to transmit the sidelink discovery signal using specific discovery resources,
or wherein the transceiver is configured to transmit the sidelink discovery signal using any sidelink resources.

6. Transceiver according to one of the preceding claims,
wherein the discovery channel is pre-configured,
or wherein the discovery channel is configured by a base station of the wireless communication system,
or wherein the transceiver is configured to transmit the sidelink discovery signal in a discovery mode of operation,
or wherein parameters for transmitting the sidelink discovery signal are pre-configured,
or wherein parameters for transmitting the sidelink discovery signal are configured by a base station of the wireless communication system.

7. Method for operating a transceiver of a wireless communication system, the method comprising:
operating the transceiver in a sidelink in-coverage, out of coverage or partial coverage scenario, in which resources for a sidelink communication are configured or preconfigured by the wireless communication system or allocated or scheduled autonomously by the transceiver,
transmitting a sidelink discovery signal to a candidate relaying transceiver of the wireless communication system,
selecting the candidate relaying transceiver as relaying transceiver if a relaying criterion is fulfilled,
**characterized in that** the sidelink discovery signal is transmitted via a discovery channel,
wherein the discovery channel is defined by a destination ID.

8. Computer program for performing a method according to claim 7.

## Patentansprüche

1. Sende-/Empfangsgerät eines Drahtloskommunikationssystems,
wobei das Sende-/Empfangsgerät dazu konfiguriert ist, in einem Sidelink-Szenario in Abdeckung, außerhalb der Abdeckung oder mit Teilabdeckung zu arbeiten, bei dem Ressourcen für eine Sidelink-Kommunikation durch das Drahtloskommunikationssystem konfiguriert oder vorkonfiguriert oder durch das Sende-/Empfangsgerät autonom zugewiesen oder geplant sind,
wobei das Sende-/Empfangsgerät dazu konfiguriert ist, ein Sidelink-Entdeckungssignal an ein in Frage kommendes weiterleitendes Sende-/Empfangsgerät des Drahtloskommunikationssystems zu senden,
wobei das Sende-/Empfangsgerät dazu konfiguriert ist, das in Frage kommende weiterleitende Sende-/Empfangsgerät als weiterleitendes Sende-/Empfangsgerät auszuwählen, wenn ein Weiterleitungskriterium erfüllt ist,
**dadurch gekennzeichnet, dass** das Sidelink-Entdeckungssignal über einen Entdeckungskanal gesendet wird,
wobei der Entdeckungskanal durch eine Ziel-ID definiert ist.

2. Sende-/Empfangsgerät gemäß dem vorhergehenden Anspruch,
wobei der Entdeckungskanal ferner durch zumindest eines definiert ist aus:
- einer Entdeckungsperiode,
- einer Dauer einer Ressourcengültigkeit,
- einer Information aus dem/den Zeit-/Frequenzressourcenort(en) von Ressourcenpools zur direkten Kommunikation oder ausschließlich zur Entdeckung in der Sidelink-Steuerinformation, SCI, der ersten oder zweiten Stufe,
- einer Quell- oder Entdeckungs-ID [.

3. Sende-/Empfangsgerät gemäß einem der vorhergehenden Ansprüche,
wobei das Sende-/Empfangsgerät dazu konfiguriert ist, Signale zu senden oder zu empfangen, die durch das weiterleitende Sende-/Empfangsgerät weitergeleitet werden.

4. Sende-/Empfangsgerät gemäß dem vorhergehenden Anspruch,
wobei das Sidelink-Entdeckungssignal eine Entdeckungsansage umfasst.

5. Sende-/Empfangsgerät gemäß einem der vorhergehenden Ansprüche,
wobei das Sende-/Empfangsgerät dazu konfiguriert ist, das Sidelink-Entdeckungssignal unter Verwendung spezifischer Entdeckungsressourcen zu senden,
oder wobei das Sende-/Empfangsgerät dazu konfiguriert ist, das Sidelink-Entdeckungssignal unter Verwendung beliebiger Sidelink-Ressourcen zu senden.

6. Sende-/Empfangsgerät gemäß einem der vorhergehenden Ansprüche,
wobei der Entdeckungskanal vorkonfiguriert ist,
oder wobei der Entdeckungskanal durch eine Basisstation des Drahtloskommunikationssystems konfiguriert ist,
oder wobei das Sende-/Empfangsgerät dazu konfiguriert ist, das Sidelink-Entdeckungssignal in einem Entdeckungsbetriebsmodus zu senden,
oder wobei Parameter zum Senden des Sidelink-Entdeckungssignals vorkonfiguriert sind,
oder wobei Parameter zum Senden des Sidelink-Entdeckungssignals durch eine Basisstation des Drahtloskommunikationssystems konfiguriert sind.

7. Verfahren zum Betreiben eines Sende-/Empfangsgeräts eines Drahtloskommunikationssystems, wobei das Verfahren folgende Schritte aufweist:
Betreiben des Sende-/Empfangsgeräts in einem Sidelink-Szenario in Abdeckung, außerhalb der Abdeckung oder mit Teilabdeckung, bei dem Ressourcen für eine Sidelink-Kommunikation durch das Drahtloskommunikationssystem konfiguriert oder vorkonfiguriert oder durch das Sende-/Empfangsgerät autonom zugewiesen oder geplant werden,
Senden eines Sidelink-Entdeckungssignals an ein in Frage kommendes weiterleitendes Sende-/Empfangsgerät des Drahtloskommunikationssystems,
Auswählen des in Frage kommende weiterleitende Sende-/Empfangsgerät als weiterleitendes Sende-/Empfangsgerät, wenn ein Weiterleitungskriterium erfüllt ist,
**dadurch gekennzeichnet, dass** das Sidelink-Entdeckungssignal über einen Entdeckungskanal gesendet wird,
wobei der Entdeckungskanal durch eine Ziel-ID definiert ist.

8. Computerprogramm zum Durchführen eines Verfahrens gemäß Anspruch 7.

## Revendications

1. Émetteur-récepteur d'un système de communication sans fil,
dans lequel l'émetteur-récepteur est configuré pour fonctionner dans une couverture de liaison latérale, en scénario hors de couverture ou de couverture partielle, dans lequel des ressources pour une communication par liaison latérale sont configurées ou préconfigurées par le système de communication sans fil ou attribuées ou planifiées de manière autonome par l'émetteur-récepteur,
dans lequel l'émetteur-récepteur est configuré pour transmettre un signal de découverte de liaison latérale à un émetteur-récepteur de relais candidat du système de communication sans fil,
dans lequel l'émetteur-récepteur est configuré pour sélectionner l'émetteur-récepteur de relais candidat en tant qu'émetteur-récepteur de relais si un critère de relais est rempli,
**caractérisé en ce que** le signal de découverte de liaison latérale est transmis par l'intermédiaire d'un canal de découverte,
dans lequel le canal de découverte est défini par un identifiant de destination.

2. Émetteur-récepteur selon la revendication précédente,
dans lequel le canal de découverte est en outre défini par au moins l'un des éléments suivants :
- une période de découverte,
- une durée d'une validité de ressource,
- une information provenant de l'emplacement ou des emplacements de ressources temporelles/fréquentielles de groupes de ressources, pour une communication directe ou exclusivement pour une découverte dans les informations de contrôle de liaison latérale, SCI, de premier ou deuxième étage,
- un identifiant de source ou de découverte

3. Émetteur-récepteur selon l'une des revendications précédentes,
dans lequel l'émetteur-récepteur est configuré pour transmettre ou recevoir des signaux relayés par l'émetteur-récepteur de relais.

4. Émetteur-récepteur selon la revendication précédente,
dans lequel le signal de découverte de liaison latérale comprend une annonce de découverte.

5. Émetteur-récepteur selon l'une des revendications précédentes,
dans lequel l'émetteur-récepteur est configuré pour transmettre le signal de découverte de liaison latérale en utilisant des ressources de découverte spécifiques, ou dans lequel l'émetteur-récepteur est configuré pour transmettre le signal de découverte de liaison latérale en utilisant n'importe laquelle des ressources de liaison latérale.

6. Émetteur-récepteur selon l'une des revendications précédentes,
dans lequel le canal de découverte est préconfiguré,
ou dans lequel le canal de découverte est configuré par une station de base du système de communication sans fil,
ou dans lequel l'émetteur-récepteur est configuré pour transmettre le signal de découverte de liaison latérale dans un mode de fonctionnement de découverte, ou dans lequel des paramètres de transmission du signal de découverte de liaison latérale sont préconfigurés,
ou dans lequel des paramètres de transmission du signal de découverte de liaison latérale sont configurés par une station de base du système de communication sans fil.

7. Procédé de fonctionnement d'un émetteur-récepteur d'un système de communication sans fil, le procédé comprenant :
le fonctionnement de l'émetteur-récepteur dans une couverture de liaison latérale, en scénario hors de couverture ou de couverture partielle, dans lequel des ressources pour une communication par liaison latérale sont configurées ou préconfigurées par le système de communication sans fil ou attribuées ou planifiées de manière autonome par l'émetteur-récepteur,
la transmission d'un signal de découverte de liaison latérale à un émetteur-récepteur de relais candidat du système de communication sans fil,
la sélection de l'émetteur-récepteur de relais candidat en tant qu'émetteur-récepteur de relais si un critère de relais est rempli,
**caractérisé en ce que** le signal de découverte de liaison latérale est transmis par l'intermédiaire d'un canal de découverte,
dans lequel le canal de découverte est défini par un identifiant de destination.

8. Programme informatique pour mettre en œuvre un procédé selon la revendication 7.
